# EUROPEAN PATENT APPLICATION

(11) **EP 0 867 152 A2**
(43) Date of publication of application: **30.09.1998**
(21) Application number: 98830093.5
(22) Date of filing: 24.02.1998
(51) Int. Cl.: A61C 1/00

(54) **A dental turbo-handpiece with anti-suction system and method to implement the system**

(30) Priority: 25.02.1997 IT BO970095
(71) Applicant: CASTELLINI S.p.A., I-40013 Castelmaggiore (Bologna) (IT)
(72) Inventor: Castellini, Franco, 40124 Bologna (IT)
(74) Representative: Lanzoni, Luciano

(57) **Abstract**

A system to prevent the effect of suction in dental handpieces with a turbine (5) envisages the application of second valve means (13) on a second exhaust duct (11) synchronized with first valve means (12) for supplying drive air. The second valve means (12) can be switched between two working positions, one of which allows air to flow through in an exhaust direction (Fs) when the first valve means (12) are open, and the other connecting the second duct (11) with means (14) that supply air under pressure, simultaneously or with a slight delay after the first valve means (12) reach the closed position. The means (14) supply air flowing in a direction (Fp) opposite the exhaust direction (Fs) in such a way as to create a counterpressure in a chamber (4) of the turbine (5) at least until the turbine stops completely.

## Description

The present invention relates to a dental handpiece driven by an air turbine with an anti-suction system and the method to implement this system.

It is widely known that handpieces of this kind, referred to generically as turbo-drills, are operated by compressed air turbines which turn at a speed ranging between 200,000 and 500,000 revolutions per minute.

These handpieces are structured as follows: a grip-body by which the handpiece can be held is equipped with a head; inside the head there is a rotating shaft, both ends of which are mounted on respective bearings and which is driven by a turbine that is coaxially connected to the shaft, the latter being housed in a chamber made in the head.

A first duct connected to a source of compressed air outside the handpiece runs through the handpiece and supplies compressed air to the inside of the head. The air flow is forced into the head and most of it leaves through a second, exhaust duct, which is parallel to the first duct and which leads out of the handpiece, while the minor remaining part of the air leaves the handpiece through clearances in the shaft-bearing assembly.

When the operator switches off the compressed air (using a valve outside the handpiece), the kinetic energy of the turbine is dissipated partly by the friction on the bearings and partly by the pumping effect of the turbine vanes. During the transient between the moment the compressed air is switched off and that when the turbine comes to a complete stop, a vacuum is created inside the chamber (generated by the turbine as it slows down) thus causing an undesirable sucking effect. The vacuum sucks in a substantial amount of air from outside the handpiece (since the compressed air supply duct is closed) through the above mentioned clearances. The air sucked in this way is usually mixed with particles of saliva and blood from the patient just treated and therefore contains pathogenic or contaminating agents which can collect inside the chamber only to flow out when the handpiece is switched on again.

This problem cannot be entirely solved by simply disinfecting the handpiece, which requires a relatively long time. Alternative solutions have therefore been devised where the handpiece is structured in such a way as to reduce or prevent the suction effect created by the rotor.

Several systems which can be built into the handpiece are known for this purpose. The first of these (see patent DE 1.107.891) envisages a device combined with the handpiece which comes into operation when the compressed air is switched off and which creates a plenum inside the turbine chamber for a certain length of time, that is, for the time required by the turbine to stop, so as to prevent air from being sucked in from the outside.

In a second known system (see patent EP 664.105), the closing of the air supply valve is controlled, preferably by an electronic control unit, in such a way as to maintain a minimum pressure in the feed duct that is too low to keep the turbine moving (the turbine is stopping) but high enough to prevent suction. This adjustment is time-switched until the turbine comes to a complete stop, the air pressure being slowly and gradually reduced to zero. In practice, the system controls the deceleration ramp of the turbine.

A third known system (see patent US 5.507.642) consists essentially in providing the turbine chamber in the handpiece head with an enlarged portion under the turbine itself so as to create an empty space. This space, between the turbine and the exhaust duct located under the turbine, is used to accommodate valve means (for example, a diaphragm disc) designed to close off the space (when the suction effect of the turbine starts) so as to obstruct the entry of air from the outside. In other terms, the area giving access to the turbine is closed off.

The systems known up to now, therefore, adopt two main approaches. The first two are based on a method that controls the delivery of the driving fluid by creating a controlled plenum in the turbine chamber that prevents air from being sucked in from the outside, while the third system opts for total closure of the part of the turbine chamber where air can be sucked in from the outside.

These systems have several disadvantages, however. The first two have extremely complex structures, necessitating control valves, additional air chambers and, particularly in the case of the second system, a series of electronic means for controlling the pressure in the handpiece ducts, which makes the handpieces very expensive. In the third case, on the other hand, the internal structure of the handpieces is such that handpieces already possessed by the dental surgeon cannot be adapted and must be completely substituted at a considerable expense.

For this reason, the Applicant has devised a dental turbo-handpiece with an anti-suction system that is simple in construction and that can easily be added to the components of conventional handpieces on the basis of elementary construction principles which make it possible to attain an extremely fast and reliable anti-suction system by acting directly on the exhaust duct of the handpiece.

The technical characteristics of the present invention, according to the above mentioned aims are described in the claims below and its advantages are apparent from the detailed description which follows, with reference to the accompanying drawings which illustrate preferred embodiments of the invention, and in which:
- Figure 1 is a perspective view of a dental handpiece with a diagram of the driving air supply and exhaust ducts equipped with the anti-suction system disclosed by the present invention;
- Figure 2 shows the handpiece illustrated in Figure 1 again in a perspective view with a diagram of the driving air supply and exhaust ducts equipped with another embodiment of the anti-suction system disclosed by the present invention;
- Figure 3 is a scaled-up detail view, with some parts cut away in order to better illustrate others, of the handpiece illustrated in Figures 1 and 2 showing the handpiece head containing a turbine for driving the dental bit. In accordance with the accompanying drawings, the system disclosed is used to prevent suction in dental turbo-handpieces. This type of handpiece, as illustrated in Figures 1 to 3, is labelled 1 as a whole and consists of an essentially cylindrical body 2.

The body 2 has, at one end of it, a head 3 (see Figure 3) that forms a chamber 4 housing a turbine 5 keyed to a shaft 6 that rotates about its longitudinal axis Z supported at either end by bearings 7 and 8.

One end of the shaft 6 protrudes from the head 3, this end being equipped with means (not illustrated) for connecting the shaft to a dental bit 9 (only partly illustrated since it is of the conventional type) used for treatment in the oral cavity.

The handpiece 1 is also equipped with a series of ducts for supplying fluids to drive the handpiece: the first of these ducts, labelled 10, supplies compressed air in direction Fa from a source labelled 10f and leads directly into the turbine 5 chamber 4 to drive the turbine; a second duct, labelled 11, leads into an area near the chamber 4 and is designed to discharge the air from the chamber 4 supplied through the first duct 10 in direction Fs towards a free exhaust.

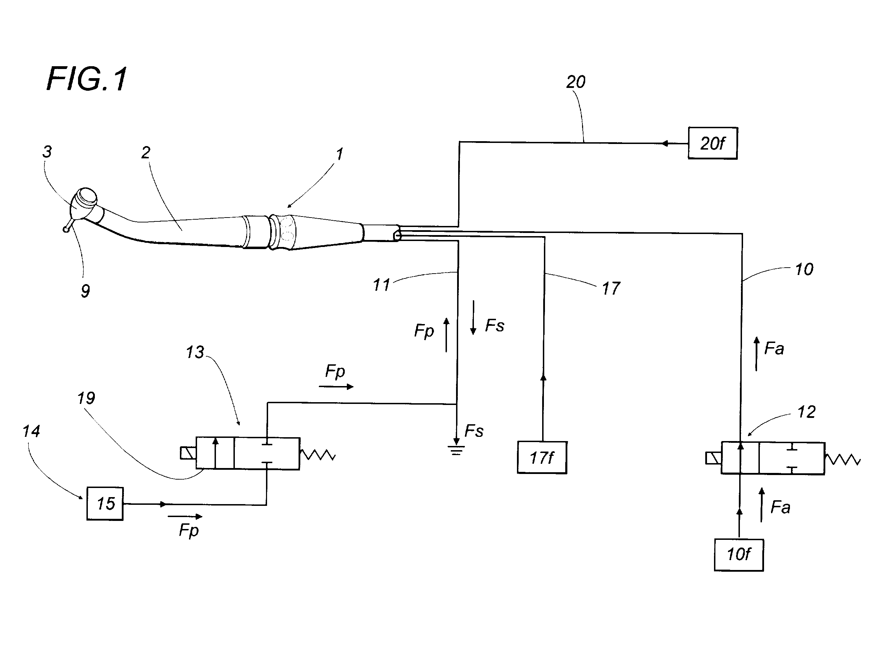

The numerals 17 and 20 in Figures 1 to 3 denote a third and a fourth duct which supply, respectively air used to cool the bit 9 and water used marginally to cool the bit 9 and principally to cool the tooth being treated. Both the ducts 17 and 20 are supplied by respective sources labelled 17f and 20f.

The first duct 10 has first valve means 12, consisting preferably of a solenoid valve, which can be switched between an open position (see Figure 1) in which the air flow Fa is allowed to pass towards the chamber 4 and a closed position (see Figure 2) in which the air flow is cut off.

The second duct 11 also has second valve means 13, synchronized with the first valve means 12 and also able to be switched between two working positions, one of which allows the air to flow out in the exhaust direction Fs (see Figure 1) when the first valve means 12 are open, and the other connects the second exhaust duct 11 to means 14 for supplying compressed air (see Figure 2) at the same time as or just after the first valve means 12 close the first duct 10.

The means 14 supply an air flow in direction Fp opposite the exhaust direction Fs in such a way as to create a counterpressure in the chamber 4 at least until the turbine 5 has come to a complete stop.

In other words, the second valve means 13 (which also consist preferably of a solenoid valve) cause a counterpressure to be created in the chamber 4 which counters the flow inside the exhaust duct 11, said counterpressure having the effect of preventing the suction created by the turbine turning freely as it decelerates.

In the embodiment illustrated in Figure 1, the second valve means 13, when they are in the connected working position, connect a part of the second duct 11 to an independent air supply unit 15 which forms the above mentioned supply means 14, the unit 15 consisting, for example, of an additional compressed air tank. In this embodiment, the remaining part of the second exhaust duct 11 remains open all the time.

In the embodiment illustrated in Figure 2, when the second valve means 13 switch to the connected working position, a part of the second duct 11 is connected to a branch 18 supplied directly, for example, by the third air spray supply duct 17 (which thus forms the supply means 14): thus, the counterpressure can be created using the compressed air from a tank forming part of standard dental equipment. Obviously, another compressed air system forming part of the dental unit can be used.

In this embodiment, the remaining part of the second exhaust duct 11 is closed by the second valve means 13.

Obviously, for application convenience, the solenoid valve 13 forming the second valve means consists preferably of a time-switched solenoid valve 19 so as to be able to obtain a counterpressure for a preset time T from the moment the first valve means 12 close to the moment the turbine 5 comes to a complete stop.

A system configured in this way greatly reduces the risk of suction created by the turbine 5 when it decelerates since it envisages a step of supplying air under pressure into the second exhaust duct in a direction Fa opposite the exhaust direction Fa at the same time as or just after the step in which the first valve means 12 on the first supply duct 11 close.

The invention described therefore achieves the aforementioned aims thanks to a simple system that can be applied to the exhaust duct of any existing type of turbo-handpiece. This system thus has a twofold advantage in that the existing handpiece does not have to be substituted or restructured and, at the same time, it constitutes a valid safety component which makes the handpiece hygienic even during the transient stage at the end of a treatment session.

The invention described can be subject to modifications and variations without thereby departing from the scope of the inventive concept. Moreover, all the details of the invention may be substituted by technically equivalent elements.

## Claims

1. An anti-suction system for dental turbo-handpieces, the handpiece (1) being of the type consisting of an essentially cylindrical body (2) with, at one end of it, a head (3) that forms a chamber (4) housing a turbine (5) keyed to a shaft (6) that rotates about its longitudinal axis (Z) supported at either end by bearings (7, 8); one end of the shaft (6) protruding from the head (3) and being equipped with means for connecting the shaft to a dental bit (9); the handpiece (1) being also equipped with a first duct (10) and a second duct (11) leading into the chamber (4), the first duct (10) being used to supply compressed air in direction (Fa) to the turbine (5) and the second duct (11) being used to discharge the air from the chamber (4) in direction (Fs); first valve means (12) being envisaged at least on the first duct (10) and being able to be switched between an open position in which the air flow is allowed to pass and a closed position in which the air flow towards the chamber (4) is cut off; said system being characterized in that it comprises second valve means (13) acting on the second, exhaust duct (11) synchronized with the first valve means (12) and able to be switched between at last two working positions, one of which allows the air to flow out in the exhaust direction (Fs) when the first valve means (12) are open, and the other connecting the second exhaust duct (11) to means (14) for supplying compressed air at the same time as the first valve means (12) close; said supply means (14) being designed to supply air flowing in a direction (Fp) opposite the exhaust direction in such a way as to create a counterpressure in the chamber (4) of the turbine (5) at least until the turbine stops completely.

2. The anti-suction system for dental turbo-handpieces, the handpiece (1) being of the type consisting of an essentially cylindrical body (2) with, at one end of it, a head (3) that forms a chamber (4) housing a turbine (5) keyed to a shaft (6) that rotates about its longitudinal axis (Z) supported at either end by bearings (7, 8); one end of the shaft (6) protruding from the head (3) and being equipped with means for connecting the shaft to a dental bit (9); the handpiece (1) being also equipped with a first duct (10) and a second duct (11) leading into the chamber (4), the first duct (10) being used to supply compressed air in direction (Fa) to the turbine (5) and the second duct (11) being used to discharge the air from the chamber (4) in direction (Fs); first valve means (12) being envisaged at least on the first duct (10) and being able to be switched between an open position in which the air flow is allowed to pass and a closed position in which the air flow towards the chamber (4) is cut off; said system being characterized in that it comprises second valve means (13) acting on the second, exhaust duct (11) synchronized with the first valve means (12) and able to be switched between at last two working positions, one of which allows the air to flow out in the exhaust direction (Fs) when the first valve means (12) are open, and the other connecting the second exhaust duct (11) to means (14) for supplying compressed air just after the first valve means (12) close; said supply means (14) being designed to supply air flowing in a direction (Fp) opposite the exhaust direction in such a way as to create a counterpressure in the chamber (4) of the turbine (5) at least until the turbine stops completely.

3. The system according to claim 1 or 2 characterized in that the air supply means (14) consist of a unit (15) independent of the source (10f) from which the first duct (10) is supplied.

4. The system according to claim 1 or 2 where the handpiece (1) has at least one third duct (17) for supplying air spray leading out of the head (3) where the dental bit (4) is located, the system being characterized in that the air supply means (14) consist of a branch (18) of said third duct (17) that can be connected through the second valve means (13) to the second exhaust duct (11).

5. The system according to claim 1 or 2 characterized in that the second valve means (13) consist of a time-switched solenoid valve (19).

6. The system according to claim 1 or 2 characterized in that the part of the second exhaust duct (11) that is not affected by the counterflow (Fp) of compressed air remains freely open when the second valve means (13) are in the connected position.

7. The system according to claim 1 or 2 characterized in that the part of the second exhaust duct (11) that is not affected by the counterflow (Fp) of compressed air is closed and sealed off when the second valve means (13) are in the connected position.

8. A method to counter the effect of suction in dental turbo-handpieces, the handpiece (1) being of the type consisting of an essentially cylindrical body (2) with, at one end of it, a head (3) that forms a chamber (4) housing a turbine (5) keyed to a shaft (6) that rotates about its longitudinal axis (Z) supported at either end by bearings (7, 8); one end of the shaft (6) protruding from the head (3) and being equipped with means for connecting the shaft to a dental bit (9); the handpiece (1) being also equipped with a first duct (10) and a second duct (11) leading into the chamber (4), the first duct (10) being used to supply compressed air in direction (Fa) to the turbine (5) and the second duct (11) being used to discharge the air from the chamber (4) in direction (Fs); first valve means (12) being envisaged at least on the first duct (10) and being able to be switched between an open position in which the air flow allowed to pass and a closed position in which the air flow towards the chamber (4) is cut off; said method being characterized in that it comprises a step of supplying compressed air into the second exhaust duct (11) in a direction (Fp) opposite the exhaust direction at the same time as the first valve means (12) close off the first supply duct (11) in such a way as to create a constant pressure in the chamber (4).

9. The method according to claim 8, characterized in that the air supply step occurs for a time (T) that is long enough to cover the interval taken by the turbine (5) to switch from an active state in which it is rotating to an inactive state in which it has come to a complete stop.
